# EUROPÄISCHE PATENTANMELDUNG

(11) **EP 4 573 886 A1**
(43) Veröffentlichungstag der Anmeldung: **25.06.2025**
(21) Anmeldenummer: 24219723.4
(22) Anmeldetag: 13.12.2024
(51) Int. Cl.: A01G 13/28, A01G 13/10

(54) **FLÄCHENELEMENT UND PFLANZENSCHUTZVORRICHTUNG**

(30) Priorität: 19.12.2023 DE 102023135873
(71) Anmelder: MeisterWerke Schulte GmbH, 59602 Rüthen-Meiste (DE)
(72) Erfinder: Schulte, Guido, 59602 Rüthen (DE)
(74) Vertreter: Ksoll, Peter

(57) **Zusammenfassung**

Ein Flächenelement (1) weist ein flexibles Flächengebilde (2) und zumindest ein Stabilisierungselement (3, 4) auf. Das Flächengebilde (2) besteht aus einem nachwachsenden Rohstoff. Das Stabilisierungselement (3, 4) und das Flächengebilde (2) sind nähtechnisch verbunden. Das Stabilisierungselement (3, 4) ist ein Holzstreifen oder Gurtband aus Naturfasern.

## Beschreibung

Die Erfindung betrifft ein Flächenelement gemäß den Merkmalen im Oberbegriff von Anspruch 1 sowie eine Pflanzenschutzvorrichtung mit einem solchen Flächenelement.

Bei dem aus der DE 101 64 037 C1 bekannten Naturfurnier können zwei Furnierblätter miteinander verbunden werden, wozu im Bereich der Längsseiten der Furnierblätter auf die Rückseite ein Kleber aufgetragen ist und sich ein Doppelfaden meanderförmig von Längsseite zu Längsseite erstreckt über den die Furnierblätter miteinander verbunden sind.

Aus der DE 77 19 222 U geht ein Profilstab, Profilleiste oder Profilbrett aus Holz oder Holzersatzstoffen hervor. Diese sind mindestens teilweise mit einer auf eine flexible Trägerfolie aufkaschierten Furnierschicht versehen. Die Trägerfolie kann aus einem Gestrick, Gewirk oder Gewebe aus Textilfäden bestehen.

Durch DE 1 923 655 A zählt eine selbstklebende Wandverkleidung zum Stand der Technik. Diese besteht aus parallel nebeneinander angeordneten bastartig zusammengefalteten Papierstreifen, die durch in Abständen voneinander verlaufenden Nähte miteinander verbunden sind. Auf die zusammengenähten Papierstreifen ist eine beidseitig mit einem selbstklebenden Stoff beschichtete Bahn geklebt.

Weiterhin geht aus der DE 20 11 807 A eine Schichtstoff-Verstärkungsware hervor. Diese ist aus parallelen Garnen aufgebaut, wobei die Garne miteinander durch Wirkmaschen verbunden sind, welche nicht die Garne durchstechen.

Flächenelemente sind in unterschiedlichsten Ausführungsformen und für verschiedenartige Anwendungszwecke bekannt, beispielsweise in Form von Gitterelementen als Spalier, Kletterhilfe oder Rankgerüst für Nutzpflanzen oder auch als Scheren- oder Faltzaun. Hierbei handelt es sich auf den jeweiligen Anwendungs- bzw. Einsatzfall angepasste feste oder flexible gitterartige Konstruktionen aus Holzlatten bzw. Holzstreifen, wobei zwei Holzstreifen in einem Kreuzungsbereich fest oder gelenkig miteinander verbunden sind.

Auch als Wuchshülle bzw. Verbissschutzvorrichtung kommen Flächenelemente in Form von Gitterelementen zum Einsatz. Solche Wuchshüllen bzw. Verbissschutzvorrichtungen dienen dazu, Setzlinge junger Pflanzen, insbesondere junger Bäume, im Wachstum zu unterstützen und vor Verbiss- und Fegeschäden durch Wild und anderen Tieren zu schützen. Eine Pflanzenschutzvorrichtung ist in der EP 2 368 422 B1 beschrieben.

Flächenelemente, beispielsweise Gitterelemente, Rankhilfen, hölzerne Schutzkonstruktionen sowie Wuchshüllen sollen bei der Anwendung im Freien, insbesondere in Wäldern, idealerweise in der Natur verbleiben, so dass sie nicht zurückgebaut werden müssen. Dazu ist es aber notwendig, dass sie sich nach dem ursprünglichen Anwendungszweck ohne schädliche Auswirkungen auf die Umwelt oder ohne Bildung von Mikroplastik zersetzen.

Insbesondere wenn Bauteile aus nicht oder schwer verrottbaren Werkstoffen eingesetzt werden oder die Fügung zwischen Bauteilen der Flächenelemente durch eine Leimverbindung hergestellt ist, ist eine rückstandsfreie biologische Verrottung langwieriger oder je nach Produkten problematisch und praktisch nicht gegeben.

Generell besteht bei Flächenelementen Bedarf diese umweltbewusster und ökologischer zu gestalten, um sowohl während deren Gebrauch als auch im Anschluss daran, insbesondere bei der Entsorgung oder einem Recycling, eine nachteilige Umweltbeeinflussung zu vermeiden.

Der Erfindung liegt daher ausgehend vom Stand der Technik die Aufgabe zugrunde, ein sowohl ökologisch als auch funktional verbessertes Flächenelement zu schaffen.

Die Lösung dieser Aufgabe besteht nach der Erfindung in einem Flächenelement gemäß Anspruch 1.

Vorteilhafte Ausgestaltungen und Weiterbildungen des erfindungsgemäßen Flächenelements sind Gegenstand der abhängigen Ansprüche.

Ausgestaltungen und Modifikationen von Merkmalen des erfindungsgemäßen Flächenelements, die einzeln oder in Kombination die Erfindung technisch vorteilhaft ausgestalten, ergeben sich auch aus der Beschreibung und den beigefügten Zeichnungen.

Das Flächenelement weist ein flexibles Flächengebilde und zumindest ein Stabilisierungselement auf. Das flexible Flächengebilde besteht aus einem nachwachsenden Rohstoff. Das zumindest eine Stabilisierungselement und das Flächengebilde sind nähtechnisch miteinander verbunden.

Ein flexibles Flächengebilde kann ein dünnes Holzfurnier bzw. ein Holzfurnierblatt sein. Auch eine dünne Holzplatte eignet sich als flexibles Flächengebilde. Insbesondere ein flexibles Flächengebilde aus einem Holzfurnier ist vorteilhaft. Das Holzfurnier weist eine Stärke von 0,5 mm bis 2,0 mm auf.

Als Holzfurniere werden vorzugsweise Nadelholzfurniere in ca. 1,0 mm Stärke oder Laubholzfurniere (Schälfurniere aus Birke, Pappel und ähnlichem) in einer Stärke zwischen 0,5 mm bis 2,0 mm verwendet.

Des Weiteren kann das flexible Flächengebilde eine Fasermatte, gebildet aus Holzfasern und/oder Papierfasern sein.

Ein flexibles Flächengebilde aus Naturfasern, welche mit natürlichen Bioharzen, zum Beispiel auf Ligninbasis gebunden sind, ist vorteilhaft.

Das flexible Flächengebilde ist diagonal oder rechtwinklig durch mit dem Flächengebilde nähtechnisch verbundenen Stabilisierungselemente versteift und verstärkt.

Erfindungsgemäß ist die Fügung des flexiblen Flächengebildes und eines Stabilisierungselements durch eine Nähverbindung realisiert. Hierbei sind das Flächengebilde und das Stabilisierungselement durch zumindest einen Faden verbunden, der durch das Stabilisierungselement und das Flächengebilde gestochen ist. Die Fügung erfolgt nähtechnisch, insbesondere mit Hilfe einer Nähmaschine. Mit Hilfe einer Nadel wird ein Faden durch das Stabilisierungselement und das flexible Flächengebilde geführt. Hierzu wird ein Durchgangsloch quer durch das Stabilisierungselement und das Flächengebilde gestochen und ein Faden eingezogen.

Insbesondere wird ein Faden mehrfach wiederholt durch das Stabilisierungselement und das Flächengebilde gestochen.

Bei der nähtechnischen Verbindung von Flächengebilde und Stabilisierungselement wird der Faden mit sich selbst und/oder mit einem weiteren Faden verschlungen.

Vorzugsweise wird die Nähverbindung mit Hilfe einer Nähnadel mit Rundspitze hergestellt. Der Durchmesser und die Geometrie der Nadelspitze ebenso wie der Durchmesser und die Qualität des eingesetzten Fadens erfolgt in Abstimmung auf das verwendete Stabilisierungselement und deren Dicke.

In der Praxis ist vorgesehen, dass zumindest zwei mit Abstand zueinander angeordnete Stabilisierungselemente vorgesehen sind.

Ein Stabilisierungselement ist ein zugstabiles Band. Ein oder vorzugsweise mehrere Stabilisierungselemente sind auf einer Außenfläche des flexiblen Flächengebildes angeordnet und mit dem Flächengebilde nähtechnisch verbunden.

Vorzugsweise sind die Stabilisierungselemente quer bzw. diagonal über das flächige flexible Flächengebilde aufgebracht. Dies vereinfacht das Einrollen eines Flächenelements zu einer Hülse oder einem rohrförmigen Körper. Bei flexiblen Flächengebilden aus Holzfurnieren ist es vorteilhaft, den Verlauf der Stabilisierungselemente so anzuordnen, dass ein Stabilisierungselement bzw. die Stabilisierungselemente den Längsfaserverlauf des Holzfurniers kreuzen. Die Stabilisierungselemente sind folglich quer bzw. diagonal über das flächige flexible Flächengebilde aus Holzfurnier angeordnet und kreuzen den Längsfaserverlauf des Holzfurniers. Dies verhindert, dass die Holzfurniere in Furnierlängsrichtung ausspalten.

Grundsätzlich können auch auf beiden Außenflächen Stabilisierungselemente vorgesehen sein.

Flächengebilde in Form von Vliesmatten oder Fasergeweben, ebenso wie Stabilisierungselemente aus Naturfasern sind vorteilhaft. Insbesondere sind Pflanzenfasern wie Fasern aus Baumwolle, Jute, Hanf, Leinen oder Kokos und ähnliche Naturfasern vorteilhaft.

Vorzugsweise ist ein Stabilisierungselement ein Holzstreifen, insbesondere ein Holzfurnierstreifen oder ein Gurtband aus Naturfasern, insbesondere aus Pflanzenfasern wie Baumwolle.

Zumindest ein Faden wird quer durch ein Stabilisierungselement und das flexible Flächengebilde gestochen. Der Faden wird durch die Dicke der beiden aufeinanderliegenden Bauteile gestochen. Eine Nähnadel durchsticht das Stabilisierungselement und das Flächengebilde von oben. Hierbei wird ein Oberfaden durch das Stabilisierungselement und das Flächengebilde geführt. Auf der Unterseite wird eine Schlinge gebildet. Diese Schlinge wird von der Greiferspitze erfasst und ein Unterfaden in die Schlinge eingefädelt. Beide Fäden werden nach oben gezogen und mit dem Stabilisierungselement verschlungen. Ein Nähstich ist entstanden. Eine fortlaufende Vielzahl dieser Nähstiche bilden eine Naht.

Die Nähverbindung zwischen den Stabilisierungselementen und dem flexiblen Flächengebilde kann grundsätzlich mit einem Faden ausgeführt sein. Vorzugsweise wird eine Nähverbindung mit mehreren Fäden hergestellt, insbesondere mit einem Oberfaden und einem Unterfaden.

Der eine Faden oder die mehreren Fäden sind vorzugsweise mehrfach wiederholt durch die Stabilisierungselemente geführt bzw. gestochen, wobei der Faden bzw. die Fäden mit sich und/oder den Stabilisierungselementen verschlungen ist bzw. sind.

Eine vorteilhafte Ausführungsform sieht vor, dass eine aus dem einen Faden oder aus mehreren Fäden gebildeten Naht sich abschnittsweise über das Flächengebilde und über mehrere Stabilisierungselemente erstreckt.

Vorzugsweise ist durch den zumindest einen Faden ein Kettenstich gebildet. Ein Kettenstich wird fachterminologisch auch Kettstich genannt. Die Nadel sticht hierbei neben der Ausstichstelle ein und bildet so eine Schlinge. Diese wird um die neue Ausstichstelle gelegt. Der Faden wird mit sich selbst verkettet. Durch die Wiederholung der Arbeitsschritte entlang der Nahtlinie entsteht eine Schlingenkette. Von unten bzw. unterseitig zeigt sich der Kettenstich mit Schlaufen, die miteinander verbunden sind. Von oben bzw. oberseitig tritt der Kettenstich als gerade Naht in Erscheinung.

Besonders bevorzugt ist die Verbindung der Stabilisierungselemente und dem flexiblen Flächengebilde durch zwei Fäden als zweifädiger Doppelkettenstich ausgeführt. Auf diese Weise wird eine elastische Naht gebildet, die sich nicht von selbst auflöst.

Bei einer vorzugsweisen Ausführungsform erstreckt sich eine aus dem zumindest einen Faden gebildete Verbindungsnaht über zumindest zwei mit einem Abstand zueinander angeordneten Stabilisierungselementen und vernäht diese mit dem flexiblen Flächengebilde.

Wie bereits ausgeführt ist ein Stabilisierungselement insbesondere ein Holzstreifen oder ein Gurtband. Bei dem Holzstreifen handelt es sich vorzugsweise um ein Holzfurnier. Bevorzugt bestehen die Holzstreifen aus 0,5 mm bis 4,0 mm dicken Streifen aus Holz, Holzwerkstoffmaterialien oder Furnierstreifen. Holzwerkstoffmaterialien basieren auf Holz in pulver- und/oder faserförmiger Form, die mit natürlichen Bindemitteln, beispielsweise Lignin, gebunden sind. Die Breite der Holzstreifen kann variieren in Abstimmung auf den jeweiligen Anwendungszweck. Grundsätzlich kann ein Holzstreifen, der als Stabilisierungselement verwendet wird, eine Breite zwischen 10 mm und 100 mm besitzen. Besonders vorteilhaft ist ein Holzstreifen zwischen 15 mm und 35 mm breit. Für die Praxis hat sich ein Holzstreifen mit einer Breite von 25 mm als besonders vorteilhaft erwiesen.

Ein Holzstreifen kann auch aus mehreren Lagen von Holzlamellen gebildet sein, die aufeinander angeordnet sind. Die Holzstreifen sind mehrlagig, insbesondere aus mehrlagigen Furnieren oder Furnierstreifen bzw. mehrlagig aus mehreren Furnierstreifen gebildet.

Ein Stabilisierungselement kann in einer vorteilhaften Ausführungsform ein Gurtband sein. Es handelt sich um ein Gurtband aus Naturfasern, insbesondere aus Pflanzenfasern wie Baumwolle. Vorzugsweise ist das Gurtband gewebt, also durch Weben von mindestens zwei Naturfaserfäden hergestellt.

Gängige Gurtbänder sind zwischen 10 mm und 100 mm breit und sind zwischen 0,3 mm bis 1 mm dick. Ein Gurtband kann beispielsweise ein Gewebeband aus ungebleichter Baumwolle oder ähnlichen Naturfasern sein. Ein Gurtband hat ein Flächengewicht zwischen 150 g/m² bis 800 g/m², insbesondere zwischen 200 g/m² und 500 g/m².

Der Faden, mit welchem die Nähverbindung zwischen dem flexiblen Flächengebilde und dem bzw. den Stabilisierungselementen hergestellt wird, besteht aus einem biokompatiblen und/oder biologisch abbaubaren Werkstoff. Insbesondere besteht der Faden aus einem nachwachsenden Rohstoff, vorzugsweise aus Naturfasern. Hier bietet sich besonders der Einsatz von Fäden aus Pflanzenfasern wie Fäden aus Baumwolle an. Diese sind vollständig und rückstandslos abbaubar.

Für die Praxis weiterhin vorteilhaft wird ein Faden angesehen, der aus mehrfach verzwirnten Baumwollfäden gebildet ist. Ein solcher Faden kann beispielsweise 3fach oder 4fach verzwirnt sein.

Vorzugsweise werden Fäden eingesetzt aus gesponnenen Baumwolllangfasern, die lediglich insoweit behandelt worden sind, dass sie einer üblichen Garnvorbehandlungsmaßnahme unterzogen worden sind, wie beispielsweise einer Merzerisierung und/oder einer Waschung.

Das Gewicht eines Fadens kann variieren. Bewährt haben sich in Versuchen Baumwoll-Nähfäden mit einem Gewicht von größer 150 dtex bis 3.000 dtex.

Für besonders langlebige Anwendungen der Flächenelemente und/oder besonders feuchte Klimabedingungen eignen sich auch Fäden auf Basis natürlicher Steinwolle oder Basaltfäden.

Möglich ist es auch, dass der Faden aus Regeneratfasern besteht. Hierbei handelt es sich um regenerierte Fasern aus pflanzlichen oder tierischen Rohstoffen, die durch Umwandlung über gelöste Verbindungen in Fadenform regeneriert werden. Das bedeutet, das Garn aus den Regeneratfasern liegt in der gleichen chemischen Substanz wie der Ausgangsstoff vor. Im Rahmen der Erfindung kommen solche Garne aus Regeneratfasern zum Einsatz, die natürlich und biologisch abbaubar sind.

Die Erfindung schafft ein vollständig natürlich und/oder biologisch abbaubares Flächenelement. Das erfindungsgemäße Flächenelement besteht vollständig aus natürlich und/oder biologisch abbaubaren nachwachsenden Rohstoffen. Auf den Einsatz von umweltproblematischen Werkstoffen, sowohl hinsichtlich des flexiblen Flächengebildes, der Stabilisierungselemente und des für die Nahtverbindung verwendeten Fadens wird vollständig verzichtet.

Die Herstellung des erfindungsgemäßen Flächenelements ist funktional und rational. Das Flächengebilde lässt sich kostengünstig produzieren. Das Flächenelement ist insbesondere als Pflanzenschutzvorrichtung verwendbar. Beim Einsatz in der Natur, beispielsweise im Wald unter natürlichen Umweltbedingungen, ist von einer Nutzungszeit von 4 bis 8 Jahre auszugehen, innerhalb der das Flächenelement bzw. die aus dem Flächenelement gefertigte Pflanzenschutzvorrichtung schadstofffrei verrotten kann.

Erfindungsgemäße Flächenelemente lassen sich für unterschiedliche Anwendungszwecke einsetzen, beispielsweise als Absperrelemente, insbesondere temporäre Absperrelemente. Wegen ihrer Biokompatibilität sind die Flächenelemente besonders geeignet für die Forst- und Landwirtschaft ebenso wie im Naturschutz. Ameisenhügel und ähnliche biologisch schützenswerte Objekte können durch die Flächenelemente bzw. durch aus den Flächenelementen hergestellte Absperrungen geschützt werden. Auch als Pflanzenschutzvorrichtungen wie Wuchshüllen oder. Verbissschutzvorrichtungen können die Flächenelemente und insbesondere aus den Flächenelementen erzeugte hüllenartige Strukturen Anwendung finden.

Die Erfindung betrifft insbesondere auch eine Pflanzenschutzvorrichtung, gebildet aus zumindest einem erfindungsgemäßen Flächenelement oder aufweisend zumindest ein erfindungsgemäßes Flächenelement.

Vorzugsweise ist ein erfindungsgemäßes Flächenelement zu einem rohrförmigen Körper geformt. Dieser rohrförmige Körper wird durch ein Verbindungsmittel in seiner Form fixiert. Auf diese Weise bildet das Flächenelement eine hüllenförmige Struktur.

Verbindungsmittel können aus Holzstreifen gebildet sein, die endseitig mittels Laschen oder Schlitzen zu einem Ring geschlossen werden können. Verbindungsmittel können auch Klammern, Schnüre oder Bänder sein. Ein Verbindungsmittel kann auch aus einem oder mehreren Fäden gebildet sein, die für die nähtechnische Verbindung von flexiblen Flächengebilde und Stabilisierungselementen eingesetzt werden. Ein Verbindungselement kann durch die Endabschnitte einer Schlingenkette gebildet sein. Die Schlingenkette selber besteht aus den Fäden, mittels welchen das flexible Flächengebilde und die Stabilisierungselemente nähtechnisch verbunden sind. Ein Verbindungsmittel besteht aus einem biologisch abbaubaren nachwachsenden Rohstoff.

Eine solche Pflanzenschutzvorrichtung kommt insbesondere als Wuchshülle und/oder Verbissschutz zu Einsatz. Insbesondere dient die Pflanzenschutzvorrichtung dazu, Setzlinge von jungen Pflanzen, insbesondere von jungen Bäumen, im Wachstum zu unterstützen und vor Verbiss- und Fegeschäden durch Wild und andere Tiere zu schützen.

Eine den allgemeinen Einsatzzweck vorteilhaft ausgestaltende Ausführungsform, insbesondere, wenn die Flächenelemente als Verbissschutz bzw. Wuchs- oder Schutzhülle für Pflanzen zum Einsatz gelangen, sieht vor, dass das Flächenelement eine rohrförmigen Körper bildet. Dieser rohrförmige Körper wird durch ein Verbindungsmittel in seiner Form fixiert. Auch das Verbindungsmittel besteht aus einem nachwachsenden Rohstoff, vorzugsweise aus einem Holzstreifen oder einem aus Pflanzenfasern gebildeten Fixierband.

Das flexible Flächengebilde, insbesondere ein Vlies oder eine Fasermatte, ist lichtdurchlässig und besteht aus einem biokompatiblen und biologisch abbaubaren nachwachsenden Rohstoff.

Das Flächengebilde kann Durchbrechungen aufweisen. Hierdurch wird sowohl die Lichtdurchlässigkeit als auch die Luftzirkulation bei einer aus einem Flächenelement gebildeten Pflanzenschutzvorrichtung verbessert.

Die Fügung mittels der Fadenverbindung zwischen den Stabilisierungselementen und dem flexiblen Flächengebilde ist fest, jedoch begrenzt gelenkig. Die durch den bzw. die Fäden gebildete Schlingenkette ermöglicht eine elastische Verbindung zwischen den Stabilisierungselementen und dem flexiblen Flächengebilde. Die Flächenelemente lassen sich gut rollen. Dies ist vorteilhaft für den Transport und/oder die Lagerung der Flächenelemente ebenso wie für den Einsatz der Flächenelemente und der Herstellung von dreidimensionalen Strukturen aus den Flächenelementen, beispielsweise hüllenartige Strukturen von Pflanzenschutzvorrichtungen wie Wuchs- bzw. Schutzhüllen bzw. Verbissschutzvorrichtungen.

Insbesondere ist ein erfindungsgemäßes Flächenelement für Anwendungen im Außenbereich vorgesehen, insbesondere in der Forst- und Landwirtschaft und im Naturschutz.

Für die Praxis ist insbesondere vorgesehen, dass ein Flächenelement als Pflanzenschutzvorrichtung zum Einsatz gelangt und/oder dass eine Pflanzenschutzvorrichtung ein erfindungsgemäßes Flächenelement aufweist bzw. aus zumindest einem solchen Flächenelement gebildet ist.

Das Flächenelement ist zu einem rohrförmigen Körper geformt. Ein oder mehrere Verbindungsmittel fixieren den rohrförmigen Körper seiner Form. Oben und unten ist der rohrförmige Körper offen.

Ein aus einem Flächenelement geformter rohrförmiger Körper, der als Wuchshülle in einer Pflanzenschutzvorrichtung zum Einsatz gelangt, kann auch trichterförmig gewickelt sein. Hierzu kann das Flächenelement trapezförmig konfiguriert sein. Grundsätzlich können die Längs- und Querseiten eines Flächenelements in einem Winkel zueinander verlaufen bzw. angeordnet sein. Ebenso sind die Stabilisierungselemente jeweils in einem Winkel zu einer Längs- und/oder Querseite eines Flächenelements verlaufend angeordnet.

Durch die Art und Anzahl der Nähte, insbesondere von Kettstichen, lässt sich Biegsamkeit und Stabilität des aus dem Flächenelement gebildeten Rohrkörpers einstellen. Zwei oder mehr nebeneinanderliegende Kettstiche führen zu einer biegesteiferen Verbindung zwischen dem flexiblen Flächengebilde und den Stabilisierungselementen als nur eine Stichreihe je Kreuzungspunkt.

Die Kettstiche bzw. Schlingenketten, die die Stabilisierungselemente mit dem flexiblen Flächengebilde verbinden, können überstehend gefertigt werden und eignen sich dann gleich zum Schließen des aus dem Flächenelement gerollten Rohrkörpers. Hierzu können die überstehenden Endabschnitte der Schlingenketten verknotet werden.

Jeweils im Bereich des oberen Endes und/oder des unteren Endes des rohrförmigen Körpers kann ein umlaufender Stabilisierungsring vorgesehen sein. Ein solcher Stabilisierungsring besteht ebenfalls aus einem nachwachsenden Rohrstoff. Insbesondere ist ein Stabilisierungsring durch einen Holzfurnierstreifen oder ein Gurtband aus Naturfasern gebildet.

Die Erfindung ist nachfolgend anhand von in den Zeichnungen dargestellten Ausführungsbeispielen näher beschrieben. Es zeigen:
- Figur 1: technisch schematisiert ein erfindungsgemäßes Flächenelement in einer Ansicht;
- Figur 2: technisch schematisiert eine Ansicht auf eine weitere Ausführungsform eines erfindungsgemäßen Flächenelements;
- Figur 3: eine Pflanzenschutzvorrichtung in einer perspektivischen Ansicht:
- Figur 4: technisch schematisiert eine weitere Ausführungsform einer Pflanzenschutzvorrichtung;
- Figur 5: ein weiteres erfindungsgemäßes Flächenelement in einer Ansicht;
- Figur 6: technisch vereinfacht und schematisiert ein aus einem Flächenelement geformter rohrförmiger Körper und
- Figur 7: einen Ausschnitt aus einer Pflanzenschutzvorrichtung in einer Perspektive.

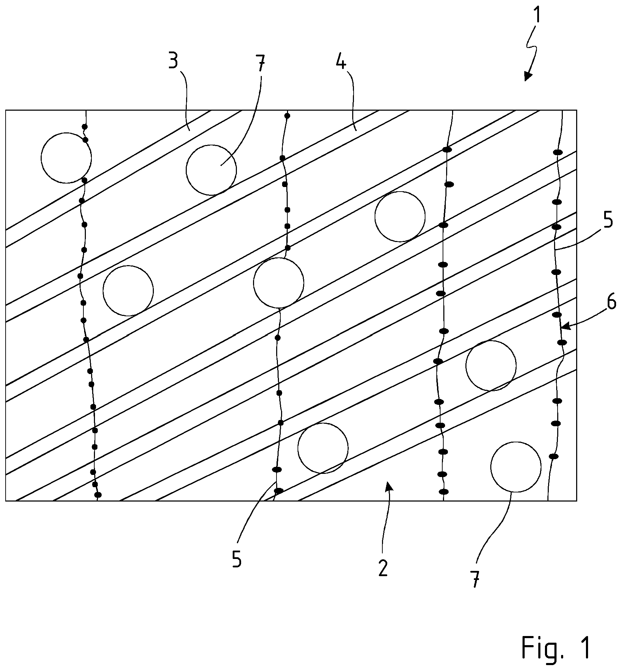

Die Figur 1 zeigt eine Ansicht auf ein Flächenelement 1.

Ein Flächenelement 1 weist ein flexibles Flächengebilde 2 und mehrere Stabilisierungselemente 3, 4 auf. Die Stabilisierungselemente 3, 4 verlaufen im dargestellten Ausführungsbeispiel diagonal über das rechteckig konfigurierte flexible Flächengebilde 2. Die Stabilisierungselemente 3, 4 sind sowohl horizontal als auch vertikal bezogen auf die Flächenerstreckung des Flächengebildes 2 mit Abstand zueinander angeordnet. Die Stabilisierungselemente 3, 4 kreuzen sich nicht.

Das flexible Flächengebilde 2 besteht aus einem nachwachsenden Rohstoff, insbesondere ist das flexible Flächengebilde 2 ein Holzfurnierblatt. Vorzugsweise weist das Holzfurnierblatt eine Stärke von 0,5 mm bis 2,0 mm auf. Das flexible Flächengebilde 2 kann auch eine Fasermatte oder Vliesmatte sein. Eine Fasermatte oder eine Vliesmatte ist gebildet aus Naturfasern, insbesondere aus Holzfasern und/oder Papierfasern und/oder Pflanzenfasern. Diese natürlichen Fasern sind mit natürlichen Bioharzen, zum Beispiel auf Ligninbasis gebunden. Ein flexibles Flächengebilde 2 kann auch ein Gewebe, beispielsweise ein Baumwollgewebe oder eine Matte aus gepressten Naturfasern sein.

Bei den Stabilisierungselementen 3, 4 handelt es sich um Holzstreifen, insbesondere Holzfurnierstreifen oder aber auch aus Streifen eines Gurtbandes. Das Gurtband besteht aus Naturfasern, insbesondere aus Pflanzenfasern wie Baumwolle. Solche Gurtbänder aus Naturfasern haben vorzugsweise ein Flächengewicht von 150 g/m² bis 800 g/m².

Das flexible Flächengebilde 2 und die Stabilisierungselemente 3, 4 sind nähtechnisch miteinander verbunden. Hierzu wird eine aus vorzugsweise zwei Fäden 5 gebildete Nähverbindung hergestellt. Zumindest einer der Fäden 5 wird jeweils quer durch ein Stabilisierungselement 3, 4 und das flexible Flächengebilde 2 gestochen, wobei der bzw. die Fäden 5 mehrfach wiederholt durch die Stabilisierungselemente 3, 4 und das Flächengebilde 2 geführt und die Fäden 5 mit sich und den Stabilisierungselementen 3, 4 sowie dem Flächengebilde 2 verschlungen sind.

Man erkennt in der Figur 1, dass eine aus den Fäden 5 gebildete Schlingenkette 6 eine Verbindungsnaht bildet, die sich quer in vertikaler Richtung über das flexible Flächengebilde 2 erstreckt und hierbei mehrere Stabilisierungselemente 3, 4 mit dem Flächengebilde 2 vernäht.

Die Fäden 5 bestehen aus einem biokompatiblen bzw. biologisch abbaubaren Werkstoff, insbesondere aus einem nachwachsenden Rohstoff. Vorzugsweise sind die Fäden 5 aus Naturfasern hergestellt, besonders bevorzugt aus Pflanzenfasern wie Baumwolle.

Das Flächengebilde 2 weist Durchbrechungen 7 auf. Die Durchbrechungen 7 sind in dem Flächengebilde 2 jeweils zwischen zwei mit Abstand diagonal zueinander verlaufenden Stabilisierungselementen 3, 4 vorgesehen. Die Durchbrechungen 7 verbessern die Lichtdurchlässigkeit bzw. Transparenz eines Flächenelements 1 und dienen auch zur Luftzirkulation.

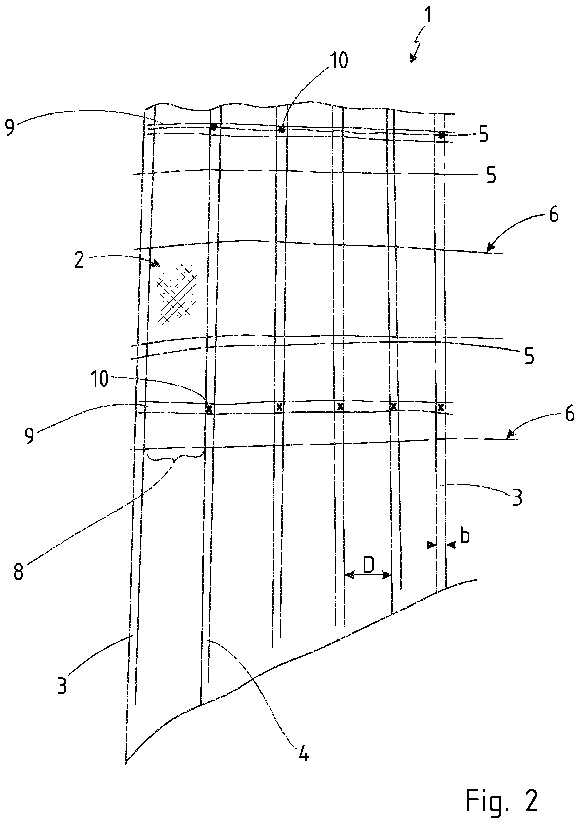

Die Figur 2 zeigt eine weitere Ausführungsform eines Flächenelements 1 und weist ein flexibles Flächengebilde 2 sowie Stabilisierungselemente 3, 4 in Form von Holzstreifen auf. Das flexible Flächengebilde 2 ist ein Vlies aus einem biologisch abbaubaren nachwachsenden Rohstoff. Das Flächengebilde 2 und die Stabilisierungselemente 3, 4 sind nähtechnisch miteinander gefügt. Hierzu ist ein Faden 5 durch die Stabilisierungselemente 3, 4 und das darunter angeordnete flexible Flächengebilde 2 gestochen. Dies erfolgt mehrfach wiederholt, so dass der Faden 5 mit sich und/oder mit den Stabilisierungselemente 3, 4 und das Flächengebilde 2 verschlungen ist.

Einzelne Stabilisierungselemente 3, 4 weisen eine Breite b auf. Die Breite b der Stabilisierungselemente 3, 4 eines Flächenelements 1 kann bei allen Stabilisierungselementen 3, 4 gleich sein. Die Breite b der Stabilisierungselemente 3, 4 kann auch variieren.

Die Stabilisierungselemente 3, 4 sind in einem definierten Abstand D parallel zueinander angeordnet. Die Stabilisierungselemente 3, 4 kreuzen sich nicht. Eine aus einem Faden 5 oder mehreren Fäden 5 gebildete Naht erstreckt sich quer über eine Anzahl von Stabilisierungselementen 3, 4. Auch eine aus Fäden 5 gebildete Schlingenkette 6 kann sich quer über eine Anzahl von Stabilisierungselementen 3, 4 erstrecken. Die Naht aus einem Faden 5 oder die Schlingenkette 6 verläuft über einen Freiraum 8 zwischen zwei Stabilisierungselementen 3, 4, wobei der Freiraum 8 im Wesentlichen dem Abstand D zwischen zwei Stabilisierungselemente 3, 4 entspricht.

Weiterhin ist vorgesehen, dass ein Fixierband 9 oder mehrere Fixierbänder 9 quer über eine Anzahl von nebeneinander angeordneten Stabilisierungselemente 3, 4 angeordnet ist. Das Fixierband 9 kann ein Gewebe-, Textil- oder Holzband sein. Das Fixierband 9 besteht aus einem biologisch abbaubaren nachwachsenden Rohstoff. In Kreuzungsstellen 10 ist ein Fixierband 9 mit den Stabilisierungselementen 3, 4 gefügt. Die Fügung ist eine Nähverbindung und durch zumindest einen Faden 5 gebildet, der durch Stabilisierungselemente 3, 4 und ein Fixierband 9 sowie durch das flexible Flächengebilde 2 gestochen ist.

Die aus einem Faden 5 gebildete Verbindungsnaht kann sich quer über die Stabilisierungselemente 3, 4 und in Längsrichtung über das Fixierband 9 erstrecken.

Zumindest in Kreuzungsstellen 10 zwischen dem Fixierband 9 und den Stabilisierungselementen 3, 4 ist das Fixierband 9 über eine genähte Verbindung an den Stabilisierungselementen 3, 4 fixiert.

Ein erfindungsgemäßes Flächenelement 1 dient insbesondere zur Bildung einer Pflanzenschutzvorrichtung 11. Das Flächenelement 1 bildet in der Pflanzenschutzvorrichtung 11 eine hüllenartige Struktur, welche eine Pflanze umschließt.

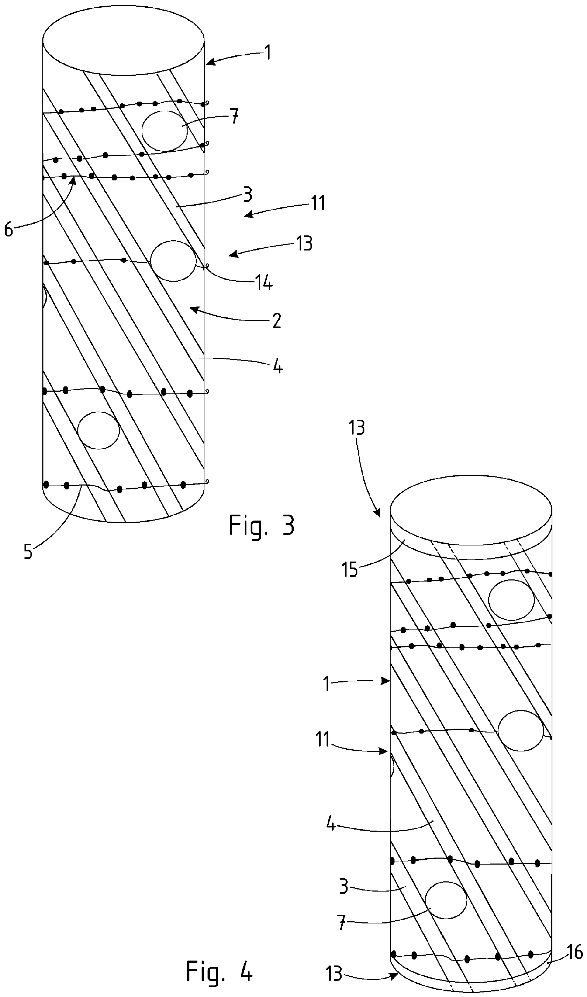

Figur 3 zeigt eine erste Ausführungsform einer Pflanzenschutzvorrichtung 11.

Ein Flächenelement 1, wie in der Figur 1 dargestellt, ist zu einem rohrförmigen Körper 12 geformt. Über Verbindungsmittel 13 ist der rohrförmige Körper 12 in seiner Form fixiert. Bei der Ausführungsform der Pflanzenschutzvorrichtung 11, wie in der Figur 3 dargestellt, sind die Verbindungmittel 13 durch Fadenabschnitte 14 gebildet. Hierbei handelt es sich um Endabschnitte oder Schlaufenabschnitte der für die Nähverbindung zwischen dem flexiblen Flächengebilde 2 und den Stabilisierungselementen 3, 4 verwendeten Fäden 5.

Die Pflanzenschutzvorrichtung 11 gemäß der Darstellung der Figur 4 entspricht vom grundsätzlichen Aufbau her der Pflanzenschutzvorrichtung 11 wie anhand der Figur 3 beschrieben. Die Pflanzenschutzvorrichtung 11 weist ein Flächenelement 1 auf, wie anhand der Figur 1 erläutert. Ein Flächenelement 1 ist zu einem rohrförmigen Körper 12 geformt. Die Form des Rohrkörpers 12 wird durch Verbindungsmittel 13 fixiert. Die Verbindungsmittel in der Ausführungsform der Pflanzenschutzvorrichtung 11, wie in der Figur 4 dargestellt, sind durch einen oberen Stabilisierungsring 15 und einem unteren Stabilisierungsring 16 gebildet. Diese sind in sich geschlossen und am oberen bzw. unteren Ende des Rohrkörpers 12 vorgesehen. Ein Stabilisierungsring 15, 16 besteht aus einem biologisch abbaubaren nachwachsenden Rohstoff, beispielsweise einem Holzfurnierstreifen oder einem Gurtband bzw. Gewebeband aus Naturfasern.

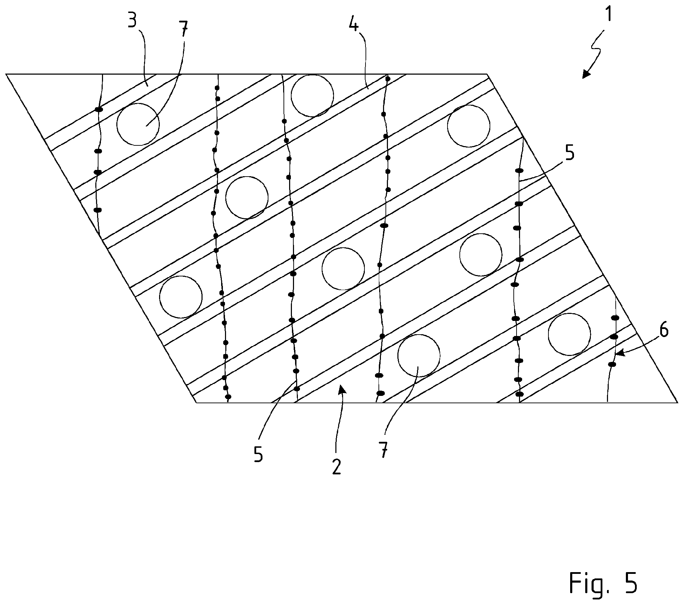

Figur 5 zeigt eine Abwandlung eines erfindungsgemäßen Flächenelements 1. Wie zuvor beschrieben weist das Flächenelement 1 ein flexibles Flächengebilde 2 aus einem Holzfurnier, einer Vliesmatte oder einem Fasergewebe auf. Das flexible Flächengebilde 2 besteht aus einem nachwachsenden Rohstoff. Das flexible Flächengebilde 2 ist trapezförmig konfiguriert.

Mit dem flexiblen Flächengebilde 2 sind Stabilisierungselemente 3, 4 nähtechnisch verbunden. Die Stabilisierungselemente 3, 4 verlaufen in einem Winkel schräg bzw. diagonal über die Fläche des flexiblen Flächengebildes 2.

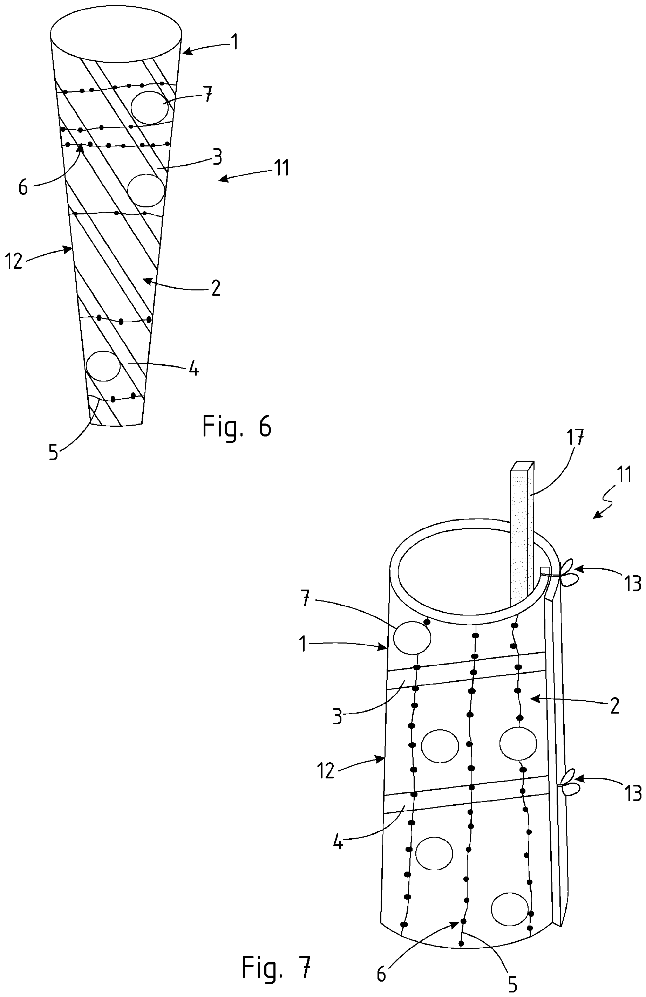

Die Figur 6 zeigt einen aus einem Flächenelement 1 geformten rohrförmigen Körper 12, der als Wuchshülle bei einer Pflanzenschutzvorrichtung 11 zum Einsatz gelangt. Der rohrförmige Körper 12 ist trichterförmig konfiguriert und erweitert sich nach oben.

Ein Einsatzbeispiel einer Pflanzenschutzvorrichtung 11 ist nochmals anhand der Darstellung der Figur 7 erläutert.

Aus einem erfindungsgemäßen Flächenelement 1 ist ein rohrförmiger Körper 12 geformt. Das Flächenelement 1 weist ein flexibles Flächengebilde 2 auf, welches durch Stabilisierungselemente 3, 4 versteift und verstärkt ist. Das flexible Flächengebilde 2 und die Stabilisierungselemente 3, 4 sind miteinander nähtechnisch verbunden. Das Flächenelement 1 ist zu einem rohrförmigen Körper 12 eingerollte und bildet so eine geschlossene Hülle für eine zu schützende Pflanze. Im Umfang des rohrförmigen Körpers 12 sind Durchbrechungen 7 vorgesehen. Der rohrförmige Körper 12 ist durch Verbindungsmittel 13 in Form von Baumwollstreifen zur hüllenförmigen Struktur geschlossen.

Die Pflanzenschutzvorrichtung 11 weist des Weiteren einen Fixierstab 17 auf. Am Fixierstab 17 ist der rohrförmige Körper 12 festgelegt. Dies kann durch die Verbindungsmittel 13 erfolgen. Der Fixierstab 17 ist am bzw. im Untergrund festgelegt. Auf diese Weise ist der rohrförmige Körper 12 der Pflanzenschutzvorrichtung 11 stabil lageorientiert und kann seine Schutzfunktion für Setzlinge von jungen Pflanzen, insbesondere von jungen Bäumen, übernehmen.

### Bezugszeichen:

- 1 -: Flächenelement
- 2 -: flexibles Flächengebilde
- 3 -: Stabilisierungselement
- 4 -: Stabilisierungselement
- 5 -: Faden
- 6 -: Schlingenkette
- 7 -: Durchbrechung
- 8 -: Freiraum
- 9 -: Fixierband
- 10 -: Kreuzungsstelle
- 11 -: Pflanzenschutzvorrichtung
- 12 -: rohrförmiger Körper
- 13 -: Verbindungsmittel
- 14 -: Fadenabschnitt
- 15 -: Stabilisierungsring
- 16 -: Stabilisierungsring
- 17 -: Fixierstab

- b -: Breite von 3, 4
- D -: Abstand zwischen 3, 4

## Patentansprüche

1. Flächenelement (1) aufweisend ein flexibles Flächengebilde (2) und zumindest ein Stabilisierungselement (3. 4), welches mit dem Flächengebilde (2) verbunden ist, **dadurch gekennzeichnet, dass** das Flächengebilde (2) aus einem nachwachsenden Rohstoff besteht und das Stabilisierungselement (3, 4) und das Flächengebilde (2) nähtechnisch verbunden sind.

2. Flächenelement (1) nach Anspruch 1, **dadurch gekennzeichnet, dass** zumindest ein Faden (5) mehrfach wiederholt durch das Stabilisierungselement (3, 4) und das Flächengebilde (2) gestochen ist.

3. Flächenelement (1) nach Anspruch 2, **dadurch gekennzeichnet, dass** der Faden (5) mit sich und/oder mit einem weiteren Faden (5) verschlungen ist.

4. Flächenelement (1) nach Anspruch 2 oder 3, **dadurch gekennzeichnet, dass** durch den zumindest einen Faden (5) ein Kettenstich gebildet ist.

5. Flächenelement (1) nach einem der Ansprüche 1 bis 4, **dadurch gekennzeichnet, dass** zumindest zwei mit Abstand (a) zueinander angeordnete Stabilisierungselemente (3, 4) vorgesehen sind.

6. Flächenelement (1) nach einem der Ansprüche 1 bis 5, **dadurch gekennzeichnet, dass** das Stabilisierungselement (3, 4) ein Holzstreifen oder ein Gurtband aus Naturfasern, insbesondere aus Pflanzenfasern wie Baumwolle, ist.

7. Flächenelement (1) nach einem der Ansprüche 2 bis 6, **dadurch gekennzeichnet, dass** der Faden (5) aus einem biokompatiblen und/oder biologisch abbaubaren Werkstoff besteht, insbesondere aus einem nachwachsenden Rohstoff, vorzugsweise aus Naturfasern, besonders bevorzugt aus Pflanzenfasern wie Baumwolle, oder aus Regeneratfasern.

8. Flächenelement (1) nach einem der Ansprüche 1 bis 7, **dadurch gekennzeichnet, dass** das flexible Flächengebilde (2) ein Naturfaservlies, ein Holzfurnierblatt oder ein Pflanzenfasergewebe, insbesondere ein Baumwollgewebe ist.

9. Flächenelement (1) nach einem der Ansprüche 1 bis 8, **dadurch gekennzeichnet, dass** das Flächengebilde (2) Durchbrechungen (7) aufweist.

10. Flächenelement (1) nach einem der Ansprüche 1 bis 9, **dadurch gekennzeichnet, dass** sich eine Verbindungsnaht über mehrere Stabilisierungselemente (3, 4) erstreckt.

11. Pflanzenschutzvorrichtung aufweisend zumindest ein Flächenelement (1) nach einem der Ansprüche 1 bis 10.

12. Pflanzenschutzvorrichtung nach Anspruch 11, **dadurch gekennzeichnet, dass** das Flächenelement (1) zu einem rohrförmigen Körper (12) geformt und durch ein Verbindungsmittel (13) fixiert ist.
